# EUROPEAN PATENT SPECIFICATION

(11) **EP 2 202 417 B1**
(45) Date of publication and mention of the grant of the patent: **13.04.2011**
(21) Application number: 09179287.9
(22) Date of filing: 15.12.2009
(51) Int. Cl.: F16C 19/26, F16C 19/28, F16C 23/08, F16C 33/60

(54) **Roller bearing**
Rollenlager
Roulement à rouleaux

(30) Priority: 25.12.2008 JP 2008330394
(43) Date of publication of application: 30.06.2010
(73) Proprietor: JTEKT Corporation, Osaka-shi Osaka 542-8502 (JP)
(72) Inventor: Uranishi, Takeharu, Osaka-shi, Osaka 542-8502 (JP)
(74) Representative: TBK-Patent

(56) References cited:
- EP-A2- 0 523 500
- JP-A- 6 235 418
- JP-A- 2003 206 924
- US-A1- 2006 293 105

## Description

The invention relates to a roller bearing according to the preamble of claim 1.

Generally, a support roll, a guide roll, a pinch roll, or the like that forms a cast piece conveying path of a continuous-casting machine is supported by a rolling bearing that bears a radial load applied by a cast piece and an axial load caused by thermal expansion of the roll.
As a rolling bearing that supports a fixed end portion of a roll, a self-aligning roller bearing was used in many cases. However, the self-aligning roller bearing has a problem that unbalanced abrasion of a raceway surface is likely to occur due to differential sliding of a roller. Therefore, in recent years, a cylindrical roller bearing with an aligning ring has been employed instead of a self-aligning roller bearing (refer to, for example, FIG. 8 of JP-A-2001-2080531.

The cylindrical roller bearing with an aligning ring includes: an aligning ring that has a concave spherical surface in its inner periphery and that is fitted to a bearing housing; an outer ring which has an outer ring raceway surface in its inner periphery, which has a convex spherical surface in its outer periphery, and of which the outer periphery is fitted to the inner periphery of the aligning ring; an inner ring that has an inner ring raceway surface in its outer periphery and that is fitted to an outer peripheral surface of a roll shaft; and cylindrical rollers that are arranged so as to be able to roll between the outer ring raceway surface and the inner ring raceway surface. The axial movement of the cylindrical rollers is restricted by outer ring ribs formed on respective sides of the outer ring raceway surface in the axial direction and inner ring ribs formed on respective sides of the inner ring raceway surface in the axial direction. Therefore, an axial load caused by thermal expansion of a roll is transmitted from the inner ring rib, formed on one side of the inner ring raceway surface in the axial direction, via the cylindrical roller, to the outer ring rib, formed on the other side of the outer ring raceway surface in the axial direction. Then, the bearing housing bears the axial load.

When a fixed end portion of the roll is supported by the cylindrical roller bearing with an aligning ring, if insufficient lubrication occurs due to excessively low speed rotation or a high load, bearing damage, for example, abrasion or scuffing occurs at the rib that receives the axial load. Especially, when the rib is a flat surface that extends in the radial direction, an end surface of the cylindrical roller is a flat surface that extends in the radial direction, and the rib and the cylindrical roller are in surface-contact with each other, insufficient lubrication becomes prominent, and bearing damage is more likely to occur.

JP 06 235418 A discloses a roller bearing having the features of the preamble of claim 1. This document shows a roller bearing comprising a roller with both axial end surfaces being spherical surfaces having a curvature radius that is smaller than a half of an axial length of the roller on the axis of the roller.

Further roller bearings are known from EP 0 523 500 A2 US 2006/293105, and JP 2003 206924 A.

It is an object of the invention to provide a roller bearing having improved load characteristics and in which abrasion and scuffing of a rib are effectively suppressed.

The object of the invention is achieved with a roller bearing having the features of claim 1. Further advantageous developments of the invention are subject-matter of the dependent claims.

The features, advantages, and technical and industrial significance of this invention will be described in the following detailed description of example embodiments of the invention with reference to the accompanying drawings, in which like numerals denote like elements, and wherein:
FIG. 1 is a cross-sectional view showing main portions of a continuous-casting machine to which a cylindrical roller bearing according to a first embodiment of the invention is applied;
FIG. 2 is a cross-sectional view of the cylindrical roller bearing; and
FIG. 3 is a cross-sectional view of a cylindrical roller bearing according to a second embodiment of the invention.

Hereafter, example embodiments of the invention will be described with reference to the accompanying drawings.

In the invention, contact states denoted by the term "point-contact" include a contact state where an elliptical contact surface is formed if a load is applied in the direction perpendicular to a contact surface, such as a contact state where a flat surface and a spherical surface contact each other.
In the invention, the term "point-contact" may denote point-contact between an end surface of a roller in the following description a) and a rib surface of a first or second rib in the following description b) or c).
a) The shape of an end surface of the roller is a differentiable convex curve (continuous and smooth convex curve: e.g. an arc) at a position of the axis of the roller in a cross-section that includes the axis of the roller and the direction of a tangent of the end surface at the position of the axis of the roller is perpendicular to the direction of the axis of the roller (especially, the shape of the end surface of the roller, in the cross-section that includes the axis of the roller, is a curve (e.g. an arc) that is line-symmetrical with respect to the axis of the roller near the position of the axis of the roller).
b) A portion of the rib surface, which contacts the end surface of the roller on the axis of the roller, is perpendicular to the axis of the roller.
c) The shape of a portion of the rib surface, which contacts the end surface of the roller on the axis of the roller, is a differentiable convex or concave curve (continuous and smooth convex curve: e.g. an arc) in a cross-section that includes the axis of the first bearing ring and the second bearing ring, and the direction of a tangent of the portion of the rib surface, which contacts the end surface of the roller, is perpendicular to the direction of the axis of the roller (especially, the shape of the portion, in the cross-section that includes the axis of the first bearing ring and the second bearing ring, is a curve (e.g. an arc) that is line-symmetrical with respect to the axis of the roller near the portion that contacts the end surface of the roller).
That is, in the invention, at least the end surface of the roller need to be a convex curved surface (e.g. spherical surface) in the above description a). The entirety of the end surface of the roller may be the convex curved surface in the above description a). Alternatively, a portion of the end surface, which includes the axis of the roller, may be the convex curved surface in the above description a).

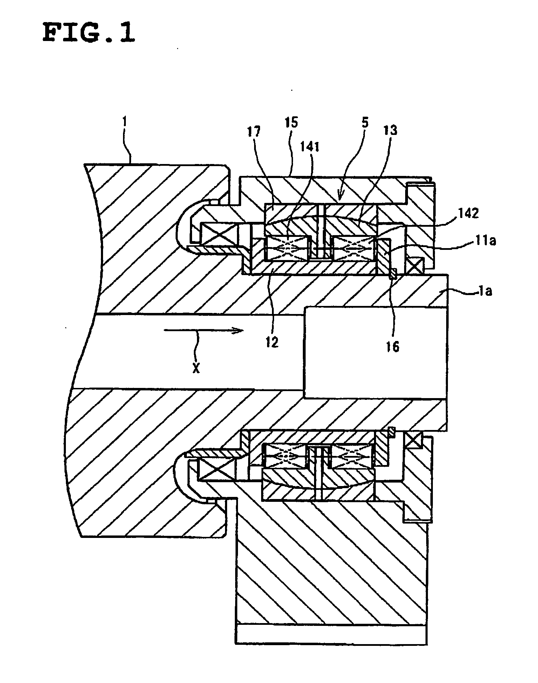

FIG. 1 is a cross-sectional view showing an end portion of a forming roll 1 of a continuous-casting machine to which a roller bearing according to a first embodiment of the invention is applied. One axial end (right end) portion 1a of the forming roll 1, which is a fixed end portion, is rotatably supported by a cylindrical roller bearing 5 with an aligning ring. The other axial end (left end) portion of the forming roll 1, which is a free end portion, is supported by, for example, a cylindrical roller bearing with an aligning ring (not shown) in such a manner that the other axial end portion is rotatable, movable in the axial direction, and pivotable.

The cylindrical roller bearing 5 in the first embodiment is a full complement roller bearing that is not provided with a retainer. The cylindrical roller bearing 5 includes: an inner ring 12 that is fitted onto an outer peripheral surface of the one axial end portion 1a of the forming roll 1; a loose rib 11a that is arranged adjacent to the inner ring 12 in the axial direction; an aligning ring 17 that is fixed to a bearing housing 15; an outer ring 13 that is slidably supported by an inner peripheral surface of the aligning ring 17, and a plurality of cylindrical rollers 141 and 142 that are aligned in two-rows and that are arranged between the outer ring 13 and the inner ring 12. A snap ring 16 fixes the positions of the inner ring 12 and the loose rib 11a in the axial direction.

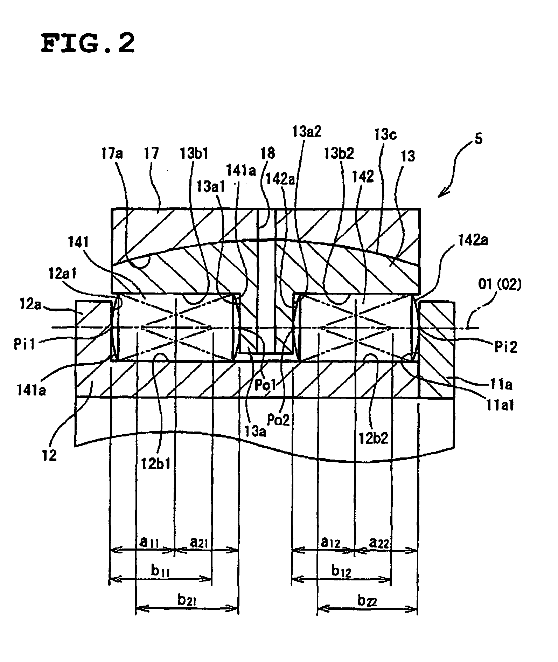

FIG. 2 is an enlarged cross-sectional view showing the cylindrical roller bearing 5. In the following description concerning the cylindrical roller bearing 5, "outward in the axial direction" (outer side in the axial direction) signifies the direction from the axial center position of the cylindrical roller bearing 5 toward each axial end of the cylindrical roller bearing 5, and "inward in the axial direction" (inner side in the axial direction) signifies the direction from each axial, end of the cylindrical roller bearing 5 toward the axial center position of the cylindrical roller bearing 5.

Inner ring raceway surfaces 12b1 and 12b2, which are aligned in two-rows, are formed in an outer periphery of the inner ring 12. An inner ring rib 12a, which projects outward in the radial direction, is formed on one side (left side in FIG. 2) of the inner ring raceway surface 12b1 in the axial direction. The loose rib 11a is arrange at a position that is adjacent to the inner ring 12 and on the other side (right side in FIG. 2) of the inner ring 12 in the axial direction. A radial outer end portion of the loose rib 11a is further outward than the inner ring raceway surface 12b2 in the radial direction

Outer ring raceway surfaces 13b1 and 13b2, which are aligned in two-rows, are formed in an inner periphery of the outer ring 13. An outer ring rib 13a, which projects inward in the radial direction, is formed between the outer ring raceway surfaces 13b1 and 13b2. A convex arc-shaped guided surface 13c is formed in an outer periphery of the outer ring 13, and the guided surface 13c is slidably fitted to a concave arc-shaped guide surface 17a that is formed in an inner periphery of the aligning ring 17. A greasing hole 18, which passes through the outer ring 13 and the aligning ring 17 in the radial direction, is formed at axial center portions of the outer ring 13 and the aligning ring 17. The greasing hole 18 opens at a radial inner end portion of the outer ring rib 13a.

The cylindrical roller 141 is arranged between the inner ring raceway surface 12b1 and the outer ring raceway surface 13b1, and is able to roll on the inner ring raceway surface 12b1 and the outer ring raceway surface 13b1. Both axial end surfaces 141a of the cylindrical roller 141 are formed in convex spherical surfaces, and bulge, in an arc-form, outward in the axial direction. The both axial end surfaces 141a have the same curvature radius, and the centers of curvature of the both axial end surfaces 141a are on an axis (rotational axis) O1 of the cylindrical roller 141.

As shown in FIG. 2, the distance between each axial end surface 141a of the cylindrical roller 141 and the center of curvature of the axial end surface 141a is greater than the distance between the axial end surface 141a and the axial center of the cylindrical roller 141. In other words, a radius b11 of the spherical surface of one axial end surface 141a and a radius b21 of the spherical surface of the other axial end surface 141a are greater than a half a11 of the axial length of the cylindrical roller 141 and a half a21 of the axial length of the cylindrical roller 141, respectively. (a11 = a21).

The cylindrical roller 142 is arranged between the inner ring raceway surface 12b2 and the outer ring raceway surface 13b2, and is able to roll on the inner ring raceway surface 12b2 and the outer ring raceway surface 13b2. Both axial end surfaces 142a of the cylindrical roller 142 are formed in convex spherical surfaces, and bulge, in an arc-form, outward in the axial direction. The both axial end surfaces 142a have the same curvature radius, and the centers of curvature of the both axial end surfaces 142a are on an axis (rotational axis) 02 of the cylindrical roller 142. As shown in FIG. 2, the distance between each axial end surface 142a of the cylindrical roller 142 and the center of curvature of the axial end surface 142a is greater than the distance between the axial end surface 142a and the axial center of the cylindrical roller 142. In other words, a radius b12 of the spherical surface of one axial end surface 142a and a radius b22 of the spherical surface of the other axial end surface 142a are greater than a half a12 of the axial length of the cylindrical roller 142 and a half a22 of the axial length of the cylindrical roller 142, respectively (a12 = a22). The cylindrical roller 142 is formed in the same shape as the cylindrical roller 141.

One axial end surface 141a of the cylindrical roller 141 contacts an axial inner surface 12a1 of the inner ring rib 12a, and the other axial end surface 141 a contacts an axial outer surface 13a1 of the outer ring rib 13a (hereinafter, these surfaces of the ribs will be referred to as "rib surfaces").
More specifically, the rib surface (inner ring rib surface) 12a1 of the inner ring rib 12a and the rib surface (outer ring rib surface) 13a1 of the outer ring rib 13a are formed in flat surfaces that are perpendicular to the axis on of the cylindrical roller 141. At contact positions Pi1 and Po1, the inner ring rib surface 12a1 and the outer ring rib surface 13a1 are in point-contact, via contact ellipses, with the cylindrical roller 141, respectively. The contact positions Pi1 and Po1 are set to be on the axis O1 of the cylindrical roller 141. The inner ring rib 12a extends further outward than the contact position Pi1 in the radial direction, and the outer ring rib 13a extends further inward than the contact position Po1 in the radial direction.

One axial end surface 142a of the cylindrical roller 142 contacts an axial inner surface 11a1 of the loose rib 11a, and the other axial end surface 142a contacts an axial outer surface 13a2 of the outer ring rib 13a (hereinafter, these surfaces of the ribs will be referred to as "rib surfaces"). More specifically, the rib surface (loose rib surface) 11a1 of the loose rib 11a and the rib surface (outer ring rib surface) 13a2 of the outer ring rib 13a are formed in flat surfaces that are perpendicular to the axis 02 of the cylindrical roller 142. At contact positions Pi2 and Po2, the loose rib surface 11a1 and the outer ring rib surface 13a2 are in point-contact, via contact ellipses, with the cylindrical roller 142, respectively. The contact positions Pi2 and Po2 are set to be on the axis 02 of the cylindrical roller 142. The loose rib 11a extends further outward than the contact position Pi2 in the radial direction, and the outer ring rib 13a extends further inward than the contact position Po2 in the radial direction. The distance from the axis 02 of the cylindrical roller 142 to the axis of the inner ring 12 and the outer ring 13 is equal to the distance from the axis O1 of the cylindrical roller 141 to the axis of the inner ring 12 and the outer ring 13.

In a roll device of the continuous-casting machine, if the forming roll 1 is thermally expanded in the axial direction, an axial load is applied from the forming roll I to the inner ring 12 in the direction of an arrow X. The axial load is transmitted from the inner ring rib 12a via the cylindrical roller 141 to the outer ring rib 13a, and then transmitted to the bearing housing 15 via the aligning ring 17 (see FIG 1). The bearing housing 15 bears the axial load.
The inner ring rib surface 12a1 and the outer ring rib surface 13a1 contact the cylindrical roller 141 at the contact positions Pi1 and Po1 on the axis O1, respectively Therefore, the axial load is transmitted along the axis O1 of the cylindrical roller 141. Accordingly, the likelihood that the cylindrical roller 141 is tilted due to the axial load is reduced. As a result, it is possible to rotate the cylindrical roller 141 more stably, and to suppress occurrence of abrasion of the rib surfaces 12a1 and 13a1 and the cylindrical roller 141.

In the roll device of the continuous-casting machine, if the forming roll 1 thermally contracts in the axial direction, an axial load is applied from the forming roll 1 to the inner ring 12 in the direction opposite to the direction of the arrow X. The axial load is transmitted from the loose rib 11a via the cylindrical roller 142 to the outer ring rib 13a, and then transmitted to the bearing housing 15 via the aligning ring 17. The bearing housing 15 bears the axial load.
The loose rib surface 11a1 and the outer ring rib surface 13a2 contact the cylindrical roller 142 at the contact positions Pi2 and Po2 on the axis 02, respectively. Therefore, the axial load is transmitted along the axis 02 of the cylindrical roller 142. Accordingly, the likelihood that the cylindrical roller 142 is tilted due to the axial load is reduced. As a result, it is possible to rotate the cylindrical roller 142 more stably, and to suppress occurrence of abrasion of the rib surfaces 11a1 and 13a2 and the cylindrical roller 142.

Generally, abrasion and scuffing (seizure) of the inner ring rib surface 12a1, the outer ring rib surface 13a1, the loose rib surface 11a1 and the outer ring rib surface 13a2 that receive an axial load are influenced by a surface pressure (P) and a relative sliding speed (V) between the rib surfaces 12a1, 13a1 and the cylindrical roller 141, and a surface pressure (P) and a relative sliding speed (V) between the rib surfaces 11a1, 13a2 and the cylindrical roller 142. Therefore, if the product of the surface pressure (P) and the sliding speed (V) (hereinafter, referred to as "PV value") is decreased, it is possible to suppress abrasion and scuffing of the rib surfaces 12a1, 13a1, 11a1 and 13a2.
In the first embodiment, the inner ring rib surface 12a1 and the outer ring rib surface 13a1 contact the axial end surfaces 141a of the cylindrical rollers 141 at the contact positions Pi1 and Po1 on the axis O1, respectively, and the loose rib surface 11a1 and the outer ring rib surface 13a2 contact the axial end surfaces 142a of the cylindrical roller 142 at the contact positions Pi2 and Po2 on the axis O2, respectively. Therefore, each of the sliding speed (V) of the cylindrical roller 141 relative to the rib surfaces 12a1 and 13a1 due to the rotation of the cylindrical roller 141 and the sliding speed (V) of the cylindrical roller 142 relative to the rib surfaces 11a1 and 13a2 due to the rotation of the cylindrical roller 142 is made lower than that in the case where the inner ring rib surface 12a1 and the outer ring rib surface 13a1 contact the axial end surfaces 141a of the cylindrical roller 141 at positions close to the outer peripheries, and the loose rib surface 11a1 and the outer ring rib surface 13a2 contact the axial end surfaces 142a at positions close to the outer peripheries. As a result, it is possible to decrease the PV value, and to suppress abrasion and scuffing of the rib surfaces 12a1, 13a1, 11a1 and 13a2.

The inventor of the subject application found through an endurance test, etc. that abrasion and scuffing occur earlier in the outer ring rib surfaces 13a1 and 13a2 than in the inner ring rib surface 12a1 and the loose rib surface 11a1 in a roller bearing that receives a radial load and an axial load under a considerably low speed rotation, for example, in a roller bearing of a continuous-casting machine. Therefore, according to the first embodiment, the contact positions Po1 and Po2 at which the outer ring rib surfaces 13a1 and 13a2 contact the cylindrical rollers 141 and 142 are set to be on the axis O1 and the axis O2, respectively. In this way, the contact positions Po1 and Po2 are set to positions in the outer ring rib surfaces 13a1 and 13a2, respectively, which are further radially inward than those in related arts (e.g. cylindrical roller bearing with an aligning ring described in Japanese Patent Application Publication No. 2001-208053). As a result, the sliding speed of the cylindrical rollers 141 and 142 relative to the outer ring 13 due to the revolution of the cylindrical rollers 141 and 142 is also reduced. Thus, it is possible to effectively suppress abrasion, etc. of the outer ring rib surfaces 13a1 and 13a2.

The structure described above makes it possible to improve the durability of the cylindrical roller bearing 5 and to prolong the replacement cycle of the cylindrical roller bearing 5, thereby reducing the maintenance cost
The contact positions Pi1 and Pi2 at which the inner ring rib surface 12a1 and the loose rib surface 11a1 contact the cylindrical rollers 141 and 142, respectively, are set to positions that are further radially outward than those in the related art. Therefore, the relative sliding speed due to the revolution of the cylindrical rollers 141 and 142 slightly increases. However, the sliding speed due to the rotation of the cylindrical rollers 141 and 142 is reduced, and abrasion is less likely to occur in the inner ring rib surface 12a1 and the loose rib surface 11a1 than in the outer ring rib surfaces 13a1 and 13a2, as described above. Therefore, the influence on the durability of the cylindrical roller bearing 5 is reduced.

The inner ring rib 12a and the loose rib 11a extend further outward than the contact positions Pi1 and Pi2 in the radial direction, respectively, and the outer ring rib 13a extends further inward than the contact positions Po1 and Po2 in the radial direction. Thus, it is possible to suppress occurrence of an edge load due to contact of edges of the inner ring rib 12a and the outer ring rib 13a with the axial end surfaces 141a of the cylindrical roller 141 and contact of edges of the loose rib 11a and the outer ring rib 13a with the axial end surfaces 142a of the cylindrical roller 142.
In the first embodiment, outer ring ribs may be formed on both sides of the outer ring 13 in the axial direction (one of the outer ring ribs may be a loose rib), and an inner ring rib may be formed at the axial center of the inner ring 12.

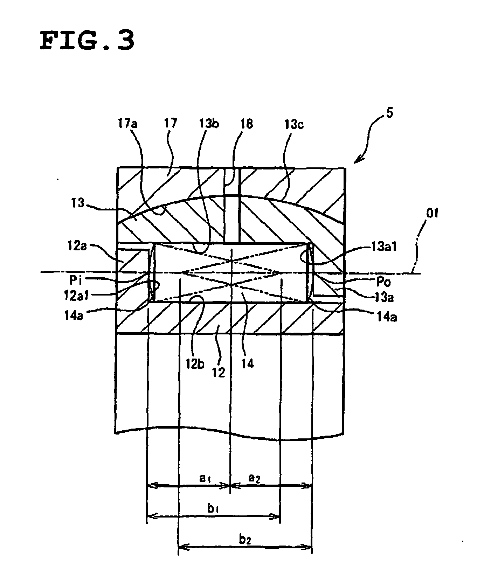

FIG. 3 is a cross-sectional view of the cylindrical roller bearing 5 according to a second embodiment of the invention. The cylindrical roller bearing 5 according to the second embodiment is structured so as to receive an axial load applied from only one side in the axial direction. In the cylindrical roller bearing 5, the inner ring 12 and the outer ring 13 have a single-row inner ring raceway surface 12b and a single-row outer ring raceway surface 13b, respectively, and cylindrical rollers 14 are aligned in a single-row and arranged so as to be able to roll between the inner ring raceway surface 12b and the outer ring raceway surface 13b. The inner ring rib 12a that projects outward in the radial direction is formed on one side (left side in FIG. 3) of the inner ring raceway surface 12b in the axial direction. The outer ring rib 13a that projects inward in the radial direction is formed on the other side (right side in FIG. 3) of the outer ring raceway surface 13b in the axial direction. The greasing hole 18 that passes through the outer ring 13a in the radial direction is formed at the axial center portion of the outer ring 13. The greasing hole 18 opens at the outer ring raceway surface 13b.

As well as the both axial end surfaces of each of the cylindrical rollers 141 and 142 in the first embodiment, the both axial end surfaces of the cylindrical roller 14 are formed in spherical surfaces. The distance between each axial end surface 14a of the cylindrical roller 14 and the center of curvature of the axial end surface 14a is greater than the distance between the axial end surface 14a and the axial center of the cylindrical roller 14. In other words, a radius b1 of the spherical surface of one axial end surface 14a and a radius b2 of the spherical surface of the other axial end surface 14a are greater than a half a1 of the axial length of the cylindrical roller 14 and a half a2 of the axial length of the cylindrical roller 14, respectively (a1 = a2).

A left end portion of the cylindrical roller 14 is in point-contact with a right surface (inner ring rib surface 12a1) of the inner ring rib 12a, which is on the left side of the cylindrical roller 14, and a right end portion of the cylindrical roller 14 is in point-contact with a left surface (outer ring rib surface 13a1) of the outer ring rib 13a. Contact positions Pi and Po at which the cylindrical roller 14 contacts the inner ring rib surface 12a and the outer ring rib surface 13a, respectively, are set to be on the axis O1 of the cylindrical roller 14. Therefore, the above-described effects are obtained also in the second embodiment.
If two cylindrical roller bearings 5 according to the second embodiment are provided so as to be opposed to each other in the axial direction, axial loads applied from both sides in the axial direction are received.

The invention is not limited to the above-described embodiments, and the above-described embodiments may be modified within the scope of the invention as defined by the claims.
For example, the axial end surfaces 141a of the cylindrical roller 141, the axial end surfaces 142a of the cylindrical roller 142 and the axial end surfaces 14a of the cylindrical roller 14 may be convex curved surfaces other than spherical surfaces.
Each of the rib surface 12a1 of the inner ring rib 12a, the rib surface 11a1 of the loose rib 11a and the rib surfaces 13a1 and 13a2 of the outer ring rib 13a has an annular shape of which the center coincides with the axis of the inner ring 12 and the outer ring 13, and may be a curved surface. In this case, the shape of each of the rib surfaces 12a1, 11a1, 13a1 and 13a2 may be a convex or concave curve (e.g. an arc) in any cross-section that includes the axis of the inner ring 12 and the outer ring 13.

If the shape of each of the rib surfaces 12a1, 11a1, 13a1 and 13a2 is a concave curve in the above-described cross-section, the axial end surfaces 141a of the cylindrical roller 141, the axial end surfaces 142a of the cylindrical roller 142 and the axial end surfaces 14a of the cylindrical roller 14 are formed in such shapes that these axial end surfaces are able to contact the concave curved surfaces of the rib surface 12a1, the rib surface 11a1, the rib surfaces 13a1 and the rib surface 13a2 on the axis of the cylindrical roller 141, the axis of the roller 142 and the axis of the roller 14, respectively. For example, when the axial end surfaces 141a of the cylindrical roller 141, the axial end surfaces 142a of the cylindrical roller 142 and the axial end surfaces 14a of the cylindrical roller 14 are spherical surfaces and the shape of each of the rib surfaces 12a1, 11a1, 13a1 and 13a2 is a concave arc in the above-described cross-section, the radius of each of the spherical surfaces needs to be less than the radius of the arc.

The axial end surfaces 141a of the cylindrical roller 141, the axial end surfaces 142a of the cylindrical roller 142 and the axial end surfaces 14a of the cylindrical roller 14 that are in point-contact with the rib surface 12a1, the rib surface 11a1, the rib surface 13a1 and the rib surface 13a2 may be spherical surfaces as in the above-described embodiments, or convex curved surfaces other than spherical surfaces. In any of these cases, portions of the axial end surfaces 141a of the cylindrical roller 141, the axial end surfaces 142a of the cylindrical roller 142, and the axial end surfaces 14a of the cylindrical roller 14, which are in point-contact with the rib surface 12a1, the rib surface 11a1, the rib surface 13a1 and the rib surface 13a2, are formed in such a manner that the directions of tangents of these portions are perpendicular to the axis of the cylindrical roller 141, the axis of the cylindrical roller 142 and the axis of the cylindrical roller 14, respectively.
Also, portions of the rib surface 12a1, the rib surface 11a1, the rib surface 13a1 and the rib surface 13a2, which are in point-contact with the axial end surfaces 141a of the cylindrical roller 141, the axial end surfaces 142a of the cylindrical roller 142 and the axial end surfaces 14a of the cylindrical roller 14, are formed in such a manner that the direction of tangents of these portions are perpendicular to the axis of the cylindrical roller 141, the axis of the cylindrical roller 142 and the axis of the cylindrical roller 14, respectively.

The invention may be applied to the cylindrical roller bearing 5 in which only one of the inner ring 12 and the outer ring 13 is provided with a rib. The invention may also be applied to a tapered roller bearing. The invention may also be applied to a cylindrical roller bearing without an aligning ring, a tapered roller bearing without an aligning ring and a spherical roller bearing without an aligning ring.
The roller bearing according to the invention may be adapted not only to a continuous-casting machine but to other uses.

## Claims

1. A roller bearing, comprising:
a first bearing ring (12) that has a first raceway surface (12b, 12b1, 12b2) and a first rib (11a, 12a);
a second bearing ring (13) that has a second raceway surface (13b, 13b1, 13b2) that faces the first raceway surface and a second rib (13a),
a plurality of rollers (14, 141, 142) that are arranged so as to be able to roll between the first raceway surface (12b, 12b1, 12b2) and the second raceway surface (13b, 13b1, 13b2),wherein
the first rib (11a, 12a) is in point-contact with one axial end surface (14a, 141a, 142a) of each of the rollers (14, 141, 142),
a contact position (Pi, Pi1, Pi2) at which the roller (14, 141, 142) and the first rib (11a, 12a) contact each other is set to be on an axis (01, 02) of the roller (14, 141, 142),
the second rib (13a) is in point-contact with the other axial end surface (14a, 141a, 142a) of each of the rollers (14, 141, 142), and
a contact position (Po, Po1, Po2) at which the roller (14, 141, 142) and the second rib (13a) contact each other is set to be on the axis of the roller (O1, O2),
a shape of the one axial end surface (14a, 141a, 142a) of the roller (14, 141, 142), in a cross-section that includes the axis (O1, O2) of the roller (14, 141, 142), is a differentiable convex curve at a position of the axis (O1, O2) of the roller (14, 141, 142),
the one axial end surface (14a, 141a, 142a) of the roller (14, 141, 142) is a spherical surface,
a direction of a tangent of the one axial end surface (14a, 141a, 142a) at the position of the axis (01, 02) of the roller (14, 141, 142) is perpendicular to a direction of the axis (01, 02) of the roller (14, 141, 142),
a shape of the other axial end surface (14a, 141a, 142a) of the roller (14, 141, 142), in a cross-section that includes the axis (O1, O2) of the roller (14, 141, 142), is a differentiable convex curve at a position of the axis (O1, O2) of the roller (14, 141, 142),
the other axial end surface (14a, 141a, 142a) of the roller (14, 141, 142) is a spherical surface, and
a direction of a tangent of the other axial end surface (14a, 141a, 142a) at the position of the axis (O1, O2) of the roller (14, 141, 142) is perpendicular to a direction of the axis (O1, O2) of the roller (14, 141, 142),
**characterized in that**
each spherical surface has a curvature radius that is greater than a half of an axial length of the roller (14, 141, 142) on the axis of the roller (14, 141, 142).

2. The roller bearing according to claim 1, wherein a portion of the first rib (11a, 12a), which contacts the one axial end surface (14a, 141a, 142a) of the roller (14, 141, 142) on the axis (O1, O2) of the roller (14, 141, 142), is a surface that is perpendicular to the axis (O1, O2) of the roller (14, 141, 142).

3. The roller bearing according to claim 1, wherein a shape of a portion of the first rib (11a, 12a), which contacts the one axial end surface (14a, 141a, 142a) of the roller (14, 141, 142) on the axis (O1, O2) of the roller (14, 141, 142), is a differentiable convex or concave curve in a cross-section that includes an axis (01, 02) of the first bearing ring (12), and a direction of a tangent of the portion of the first rib (11a, 12a), which contacts the one axial end surface (14a, 141a, 142a) of the roller (14, 141, 142), is perpendicular to the direction of the axis (01, 02) of the roller (14, 141, 142).

4. The roller bearing according to any one of claims 1 to 3, wherein a portion of the second rib (13a), which contacts the other axial end surface (14a, 141a, 142a) of the roller (14, 141, 142) on the axis (O1, O2) of the roller (14, 141, 142), is a surface that is perpendicular to the axis (O1, O2) of the roller (14, 141, 142).

5. The roller bearing according to any one of claims 1 to 3, wherein a shape of a portion of the second rib (13a), which contacts the other axial end surface (14a, 141a, 142a) of the roller (14, 141, 142) on the axis (O1, O2) of the roller (14, 141, 142), is a differentiable convex or concave curve in a cross-section that includes an axis of the second bearing ring (13), and a direction of a tangent of the portion of the second rib (13a), which contacts the other axial end surface (14a, 141a, 142a) of the roller (14, 141, 142), is perpendicular to the direction of the axis (O1, O2) of the roller (14, 141, 142).

6. Use of the roller bearing according to any one of claims 1 to 5 to support a roll.

7. Use of the roller bearing according to any one of claims 1 to 5 to support a roll of a continuous casting machine.

## Patentansprüche

1. Rollenlager mit:
einem ersten Lagerring (12), der eine erste Laufringfläche (12b, 12b1, 12b2) und eine erste Rippe (11a, 12a) hat;
einem zweiten Lagerring (13), der eine zweite Laufringfläche (13b, 13b1, 13b2), die der ersten Laufringfläche zugewandt ist, und eine zweite Rippe (13a) hat,
einer Vielzahl von Rollen (14, 141, 142), die so angeordnet sind, dass sie zwischen der ersten Laufringfläche (12b, 12b1, 12b2) und der zweiten Laufringfläche (13b, 13b1, 13b2) rollen können, wobei
die erste Rippe (11a, 12a) mit einer axialen Endfläche (14a, 141a, 142a) von jeder der Rollen (14, 141, 142) in Punktkontakt ist,
eine Kontaktposition (Pi, Pi1, Pi2), an der die Rolle (14, 141, 142) und die erste Rippe (11a, 12a) einander berühren, festgelegt ist, um auf einer Achse (O1, O2) der Rolle (14, 141, 142) zu sein,
die zweite Rippe (13a) in Punktkontakt mit der anderen axialen Endfläche (14a, 141a, 142a) von jeder der Rollen (14, 141, 142) ist, und
eine Kontaktposition (Po, Po1, Po2), an der die Rolle (14, 141, 142) und die zweite Rippe (13a) einander berühren, festgelegt ist, um auf der Achse der Rolle (O1, O2) zu sein,
eine Form der einen axialen Endfläche (14a, 141a, 142a) der Rolle (14, 141, 142) in einem Querschnitt, der die Achse (01, 02) der Rolle (14, 141, 142) umfasst, ist eine differenzierbare konvexe Kurve an einer Position der Achse (O1, O2) der Rolle (14, 141, 142),
die eine axiale Endfläche (14a, 141a, 142a) der Rolle (14, 141, 142) eine kugelige Fläche ist,
eine Richtung einer Tangente der einen axialen Endfläche (14a, 141a, 142a) an der Position der Achse (O1, O2) der Rolle (14, 141, 142) senkrecht zu einer Richtung der Achse (01, 02) der Rolle (14, 141, 142) ist,
eine Form der anderen axialen Endfläche (14a, 141a, 142a) der Rolle (14, 141, 142) in einem Querschnitt, der die Achse (O1, O2) der Rolle (14, 141, 142) umfasst, eine differenzierbare konvexe Kurve an einer Position der Achse (O1, O2) der Rolle (14, 141, 142) ist,
die andere axiale Endfläche (14a, 141a, 142a) der Rolle (14, 141, 142) eine kugelige Fläche ist, und
eine Richtung einer Tangente der anderen axialen Endfläche (14a, 141a, 142a) an der Position der Achse (O1, O2) der Rolle (14, 141, 142) senkrecht zu einer Richtung der Achse (01, 02) der Rolle (14, 141, 142) ist,
**dadurch gekennzeichnet, dass**
jede kugelige Fläche einen Krümmungsradius hat, der größer als eine Hälfte einer axialen Länge der Rolle (14, 141, 142) auf der Achse der Rolle (14, 141, 142) ist.

2. Rollenlager nach Anspruch 1, wobei ein Abschnitt der ersten Rippe (11a, 12a), der die eine axiale Endfläche (14a, 141a, 142a) der Rolle (14, 141, 142) auf der Achse (O1, O2) der Rolle (14, 141, 142) berührt, eine Fläche ist, die senkrecht zu der Achse (O1, O2) der Rolle (14, 141, 142) ist.

3. Rollenlager nach Anspruch 1, wobei eine Form eines Abschnitts der ersten Rippe (11a, 12a), der die eine axiale Endfläche (14a, 141a, 142a) der Rolle (14, 141, 142) auf der Achse (O1, O2) der Rolle (14, 141, 142) berührt, eine differenzierbare konvexe oder konkave Kurve in einem Querschnitt ist, der eine Achse (01, 02) des ersten Lagerrings (12) umfasst, und eine Richtung einer Tangente des Abschnitts der ersten Rippe (11a, 12a), der die eine axiale Endfläche (14a, 141a, 142a) der Rolle (14, 141, 142) berührt, senkrecht zu der Richtung der Achse (O1, O2) der Rolle (14, 141, 142) ist.

4. Rollenlager nach einem der Ansprüche 1 bis 3, wobei ein Abschnitt der zweiten Rippe (13a), der die andere axiale Endfläche (14a, 141a, 142a) der Rolle (14, 141, 142) auf der Achse (O1, O2) der Rolle (14, 141, 142) berührt, eine Fläche ist, die senkrecht zu der Achse (01, 02) der Rolle (14, 141, 142) ist.

5. Rollenlager nach einem der Ansprüche 1 bis 3, wobei eine Form eines Abschnitts der zweiten Rippe (13a), der die andere axiale Endfläche (14a, 141a, 142a) der Rolle (14, 141, 142) auf der Achse (O1, O2) der Rolle (14, 141, 142) berührt, eine differenzierbare konvexe oder konkave Kurve in einem Querschnitt ist, der eine Achse des zweiten Lagerrings (13) umfasst, und eine Richtung einer Tagente des Abschnitts der zweiten Rippe (13a), der die andere axiale Endfläche (14a, 141a, 142a) der Rolle (14, 141, 142) berührt, senkrecht zu der Richtung der Achse (O1, O2) der Rolle (14, 141, 142) ist.

6. Verwendung des Rollenlagers nach einem der Ansprüche 1 bis 5, um eine Rolle zu stützen.

7. Verwendung des Rollenlagers nach einem der Ansprüche 1 bis 5, um eine Rolle einer Stranggussmaschine zu stützen.

## Revendications

1. Roulement à rouleaux, comprenant :
une première bague de roulement (12) qui a une première surface de chemin de roulement (12b, 12b1, 12b2) et un premier épaulement (11a, 12a) ;
une deuxième bague de roulement (13) qui a une deuxième surface de chemin de roulement (13b, 13b1, 13b2) qui fait face à la première surface de chemin de roulement et un deuxième épaulement (13a),
une pluralité de rouleaux (14, 141, 142) qui sont agencés de manière à pouvoir rouler entre la première surface de chemin de roulement (12b, 12b1, 12b2) et la deuxième surface de chemin de roulement (13b, 13b1, 13b2), où
le premier épaulement (11a, 12a) est en contact ponctuel avec une surface d'extrémité axiale (14a, 141a, 142a) de chacun des rouleaux (14, 141, 142),
une position de contact (Pi, Pi1, Pi2) à laquelle le rouleau (14, 141, 142) et le premier épaulement (11a, 12a) sont en contact l'un avec l'autre, est réglée pour se trouver sur un axe (01, 02) du rouleau (14, 141, 142),
le deuxième épaulement (13a) est en contact ponctuel avec l'autre surface d'extrémité axiale (14a, 141a, 142a) de chacun des rouleaux (14, 141, 142), et
une position de contact (P0, P01, P02) à laquelle le rouleau (14, 141, 142) et le deuxième épaulement (13a) sont en contact l'un avec l'autre, est réglée pour se trouver sur l'axe du rouleau (01, 02),
une forme de la surface d'extrémité axiale (14a, 141a, 142a) du rouleau (14, 141, 142), dans une coupe transversale qui comporte l'axe (01, 02) du rouleau (14, 141, 142), est une courbe convexe différentiable à une position de l'axe (O1, O2) du rouleau (14, 141, 142),
la surface d'extrémité axiale (14a, 141a, 142a) du rouleau (14, 141, 142) est une surface sphérique,
une direction d'une tangente de la surface d'extrémité axiale (14a, 141a, 142a) à la position de l'axe (O1, O2) du rouleau (14, 141, 142) est perpendiculaire à une direction de l'axe (01, 02) du rouleau (14, 141, 142),
une forme de l'une surface d'extrémité axiale (14a, 141a, 142a) du rouleau (14, 141, 142), dans une coupe transversale qui comporte l'axe (01, 02) du rouleau (14, 141, 142), est une courbe convexe différentiable à une position de l'axe (01, 02) du rouleau (14, 141, 142),
l'autre surface d'extrémité axiale (14a, 141a, 142a) du rouleau (14, 141, 142) est une surface sphérique,
une direction d'une tangente de l'autre surface d'extrémité axiale (14a, 141a, 142a) à la position de l'axe (O1, O2) du rouleau (14, 141, 142) est perpendiculaire à une direction de l'axe (O1, O2) du rouleau (14, 141, 142), **caractérisée en ce que** chaque surface sphérique de chacune des deux extrémités axiales du rouleau a un rayon de courbure qui est plus important qu'une moitié d'une longueur axiale du rouleau (14, 141, 142) sur l'axe du rouleau (14, 141, 142).

2. Roulement à rouleaux selon la revendication 1, dans lequel une partie du premier épaulement (11a, 12a), qui se trouve en contact avec la surface d'extrémité axiale (14a, 141a, 142a) du rouleau (14, 141, 142) sur l'axe (01, 02) du rouleau (14, 141, 142), est une surface qui est perpendiculaire à l'axe (01, 02) du rouleau (14, 141, 142).

3. Roulement à rouleaux selon la revendication 1, dans lequel une forme d'une partie du premier épaulement (11a, 12a), qui se trouve en contact avec surface d'extrémité axiale (14a, 141a, 142a) du rouleau (14, 141, 142) sur l'axe (O1, O2) du rouleau (14, 141, 142), est une courbe concave ou convexe différentiable dans une coupe transversale qui comporte un axe (01, 02) de la première bague de roulement (12), et une direction d'une tangente de la partie du premier épaulement (11a, 12a), qui se trouve en contacte avec la surface d'extrémité axiale (14a, 141a, 142a) du rouleau (14, 141, 142), est perpendiculaire à la direction de l'axe (O1, O2) du rouleau (14, 141, 142).

4. Roulement à rouleaux selon l'une quelconque des revendications 1 à 3, dans lequel une partie du deuxième épaulement (13a), qui se trouve en contact avec l'autre surface d'extrémité axiale (14a, 141a, 142a) du rouleau (14, 141, 142) sur l'axe (O1, O2) du rouleau (14, 141, 142), est une surface qui est perpendiculaire à l'axe (O1, O2) du rouleau (14, 141, 142).

5. Roulement à rouleaux selon l'une quelconque des revendications 1 à 3, dans lequel une forme d'une partie du deuxième épaulement (13a), qui se trouve en contact avec l'autre surface d'extrémité axiale (14a, 141a, 142a) du rouleau (14, 141, 142) sur l'axe (O1, O2) du rouleau (14, 141, 142), est une courbe concave ou convexe différentiable dans une coupe transversale qui comporte un axe de la deuxième bague de roulement (13), et une direction d'une tangente de la partie du deuxième épaulement (13a), qui se trouve en contact avec l'autre surface d'extrémité axiale (14a, 141a, 142a) du rouleau (14, 141, 142), est perpendiculaire à la direction de l'axe (O1, O2) du rouleau (14, 141, 142).

6. Utilisation du roulement à rouleaux selon l'une quelconque des revendications 1 à 5 pour supporter un rouleau.

7. Utilisation du roulement à rouleaux selon l'une quelconque des revendications 1 à 5 pour supporter un rouleau d'une machine à coulée continue.
